# EUROPEAN PATENT APPLICATION

(11) **EP 4 737 782 A1**
(43) Date of publication of application: **06.05.2026**
(21) Application number: 24210189.7
(22) Date of filing: 31.10.2024
(51) Int. Cl.: F16L 33/207

(54) **PRESS SLEEVE FOR A PRESS FITTING OF A PIPE CONNECTION, METHOD OF MANUFACTURING A PRESS SLEEVE, PRESS FITTING FOR A PIPE CONNECTION AND METHOD OF MANUFACTURING A PRESS FITTING**

(71) Applicant: Uponor Innovation AB, 737 61 Virsbo (SE)
(72) Inventor: Tomminen, Aleksis, 15561 Nastola (FI); Holopainen, Aki, 15561 Nastola (FI); Rotso, Vesa, 15561 Nastola (FI); Kauppinen, Tuomas, 15561 Nastola (FI); Ross, Andreas, 97437 Hassfurt (DE); Dittmar, Rainer, 97422 Schweinfurt (DE)
(74) Representative: Fenner, Seraina

(57) **Abstract**

The invention relates to a press sleeve (1) for a press fitting (2) of a pipe connection, with a cylindrical pressing area (3), an end flange (4) projecting outwards beyond the pressing area (3) at a first end of the press sleeve (1) in the radial direction with respect to a longitudinal centre axis (5) of the press sleeve (1), and a latching collar (7) projecting inwards in the radial direction at a second end of the press sleeve (1) for latching with a fitting body (16) and/or a stop ring (15) of the press fitting (2). It is provided that at the second end of the press sleeve (1), a contact projection (8) projecting outwards in the radial direction and forming together with the latching collar (7) an end side (10) of the press sleeve (1) is configured for contact with the stop ring (15). The invention also relates to a method for producing a press sleeve (1) for a press fitting (2) of a pipe connection, a press fitting (2) for a pipe connection and a method for manufacturing a press fitting (2) for a pipe connection.

## Description

The invention relates to a press sleeve for a press fitting of a pipe connection, with a cylindrical pressing area, an end flange projecting outwards beyond the pressing area at a first end of the press sleeve in the radial direction with respect to a longitudinal centre axis of the press sleeve, and a latching collar projecting inwards in the radial direction at a second end of the press sleeve for latching with a fitting body and/or a stop ring of the press fitting. The invention also relates to a method for producing a press sleeve for a press fitting of a pipe connection, a press fitting for a pipe connection and a method for manufacturing a press fitting for a pipe connection.

Publication DE 10 2018 109 555 B3, for example, is known from the prior art. This document describes a press fitting for a pipe connection, comprising a fitting body for connecting the press fitting to a pipe; a press sleeve fixed to the fitting body with an essentially cylindrical pressing area and at least one protruding element that limits the essentially cylindrical pressing area in the axial direction; a tubular band made of a plastic film which surrounds the substantially cylindrical pressing area of the press sleeve, the tubular band being arranged so as to be rotatable relative to a surface of the press sleeve, being held in the cylindrical pressing area by the at least one projecting element and being at least partially destroyed when the press sleeve is pressed with a pressing tool.

Furthermore, the publication DE 10 2021 126 520 A1 discloses an assembly group for a press fitting, comprising: a substantially cylindrical press sleeve with a pressing area; and a stop ring fixed at a first axial end of the press sleeve, which limits the pressing area in an axial direction of the press sleeve, wherein the stop ring has the following: a first inner contour on a side opposite the pressing area for applying the assembly group to a fitting body of the press fitting; a first circular segment and a second circular segment adjacent thereto that extends over a smaller part of the first inner contour than the first circular segment; a cross-section that remains constant in the region of the first circular segment; and an element arranged in the region of the second circular segment, which projects inwards beyond the constant cross-section of the first circular segment, so that it causes a relative tilting of an axis of symmetry of the press sleeve with respect to a central axis of the fitting body when the assembly group is applied to the fitting body.

Furthermore, the publication DE 20 2021 105 547 U1 describes a press fitting for a pipe connection, comprising a fitting body for connecting the press fitting to a pipe; a substantially cylindrical press sleeve fixed to the fitting body with a pressing area; and a stop ring fixed to the press sleeve, which limits the pressing area in an axial direction of the press sleeve, wherein the stop ring has a substantially cylindrical inner contour with protruding first regions and second regions receding from the first regions, the first regions of the stop ring clampingly embrace an outer contour of the press sleeve, and the second regions of the stop ring are spaced from the outer contour of the press sleeve.

A further press fitting for a pipe is known from the publication EP 1 790 896 A1. The press fitting described has a fitting body which has a support body onto which a pipe to be connected can be pushed, a press sleeve which has a pressing area in which a pressing tool acts on the press sleeve when it is pressed, and a pressing indicator ring which is held in the press sleeve. It is provided that the pressing indicator ring has a plurality of ring segments, the ends of neighbouring ring segments facing one another being connected to one another by connecting webs which can be destroyed or separated from the ring segments, and that the pressing indicator ring is arranged on the press sleeve in such a way that the ring segments are located outside the pressing area of the press sleeve and the connecting webs and/or parts branching off from these extend into the pressing area of the press sleeve.

It is the object of the invention to provide a press sleeve for a press fitting of a pipe connection which has advantages over known press sleeves, in particular which ensures simple manufacture of the press sleeve, simple manufacture of the press fitting and reliable retention of the press sleeve on the press fitting.

According to the invention, this is achieved with a press sleeve for a press fitting of a pipe connection with the features of claim 1. It is provided that at the second end of the press sleeve a contact projection projecting outwards in the radial direction and forming together with the latching collar an end side of the press sleeve is configured for latching with the stop ring.

Advantageous embodiments with expedient further embodiments of the invention are indicated in the dependent claims. It should be noted that the embodiments explained in the description are not limiting; rather, any variations of the features disclosed in the description, the claims and the figures can be realised.

The press sleeve is preferably a component of the press fitting, but can of course also be present separately from it, in particular until the press sleeve is assembled as a component of the press fitting. The press sleeve can also be termed crimping sleeve. The press fitting is again preferably part of the pipe connection. The press fitting can also be present separately from the pipe connection. In addition to the press fitting, the pipe connection comprises one or more pipes which are fluidically connected to each other via the press fitting. For this purpose, the press fitting has several fluid connections for the pipes, namely one fluid connection for each of the pipes. In particular, the fluid connections are located on a fitting body of the press fitting, whereby the pipes are plugged onto the fluid connections. A flow connection is then established between the pipes via the fitting body.

In order to firmly connect the pipes to the fitting body, the press fitting has one or more press sleeves in addition to the fitting body. The press sleeve is deformed locally during assembly of the pipe connection so that it holds one of the pipes or the pipes on the fitting body. In particular, the deformation of the press sleeve ensures that the pipe or pipes are held between the fitting body and the press sleeve in a force-fit and/or form-fit manner. The press fitting enables the pipe connection to be made particularly quickly, which in turn is characterised by its high durability. The press fitting can be configured to connect pipes with the same or different pipe diameters. The pipes are, for example, water pipes or gas pipes.

The press sleeve has at least the cylindrical pressing area, the end flange arranged on one side of the pressing area and the latching collar and the contact projection on the other side of the pressing area. The pressing area is preferably circular-cylindrical in shape and is used to secure one of the pipes to the fitting body by plastic deformation. To create the pipe connection, the pipe is positioned between the fitting body and the press sleeve and the pressing area of the press sleeve is formed using a pressing tool in such a way that the pipe is fixed between the fitting body and the deformed press sleeve or the deformed pressing area. Before the pressing area is deformed, the fitting body and the pressing area jointly define a pipe receptacle for the pipe or the pipes, namely the fitting body inwards in a radial direction and the pressing area outwards in a radial direction.

After arranging the pipes in the pipe holder, the pressing tool is arranged on the press fitting in such a way that it surrounds the pressing area. Preferably, the pressing tool is in contact with the end flange on the one hand and the stop ring on the other. In this respect, the end flange and the stop ring serve to precisely position the pressing tool on the press fitting. The pressing area is then deformed using the pressing tool and the pipe is connected to the press fitting.

The first end of the press sleeve is located on one side of the pressing area and the second end of the press sleeve is located on the other side of the pressing area. The first end and the second end therefore accommodate the pressing area between them when viewed in the axial direction. The end flange is formed at the first end by shaping the press sleeve radially outwards; it is therefore in the form of a collar, in particular an annular collar, which projects radially outwards beyond the pressing area. Both the latching collar and the contact projection are produced at the second end of the press sleeve. The latching collar extends inwards in a radial direction, in particular it protrudes inwards over the pressing area in a radial direction. The contact projection, on the other hand, extends outwards in a radial direction; preferably it protrudes outwards in a radial direction over the pressing area. The latching collar and the contact projection are preferably continuous in the circumferential direction.

The latching collar serves to positively secure, i.e. in a form-fitting manner, the press sleeve to the fitting body and/or the stop ring. For example, the latching collar is latched directly to the fitting body and engages in a corresponding recess in the fitting body for this purpose. Alternatively, the latching collar is latchingly connected to the stop ring. For this purpose, the latching collar engages in a corresponding recess in the stop ring. The stop ring in turn engages in the recess of the fitting body so that the latching collar is positively, i.e. form-fittingly, connected to the fitting body via the stop ring, in particular is fixed in the axial direction with respect to the fitting body, for example with or without play.

The contact projection serves to hold the stop ring in place in the axial direction. The stop ring therefore rests against the contact projection in the axial direction, in particular on one side only. This means that the contact projection does not fix the stop ring in the axial direction, but merely limits the displacement of the stop ring with respect to the press sleeve or vice versa in the axial direction on one side. For example, the stop ring has a recess into which the contact projection is inserted in the axial direction during assembly of the press fitting. The holder has dimensions in the axial direction that correspond at least to the dimensions of the contact projection in the same direction. The recess is limited in the axial direction on one side, for example due to a step, so that a contact surface is created for the contact projection.

The press sleeve or the press fitting is thus preferably configured in such a way that the stop ring and the press sleeve are only fixed on both sides in the axial direction by the co-operation of the latching collar and the contact projection. In particular, the contact projection serves to transfer a force acting on the stop ring in the axial direction, which is directed towards pushing the press sleeve onto the press fitting, to the press sleeve. In addition, the contact projection and the latching collar are at least partially overlapping when viewed in the axial direction.

With the aid of the contact projection, the latching collar can therefore be pushed inwards in a radial direction after the press fitting has been installed so that it is reliably held in the recess of the fitting body or the recess of the stop ring. This reliably prevents the latching connection between the press sleeve and the fitting body from loosening. This is achieved in a particularly simple way in that the latching collar and the contact projection are each arranged on the end side of the press sleeve, i.e. they each form the end side of the press sleeve. The end side is to be understood as a side of the press sleeve which delimits the press sleeve in the axial direction on the side of its second end.

The press sleeve described can be manufactured in a particularly simple manner. For example, it is intended to first produce a semi-finished product of the press sleeve by forming a workpiece, preferably by tensile pressure forming, particularly preferably by deep drawing. The semi-finished product is then further processed to produce one or more of the following elements: the latching collar, the contact projection and (optionally) the end flange. This can also be done by forming and/or machining. For example, the latching collar and the contact projection are produced in one step. However, it is also possible to first form the end flange and either the latching collar or the contact projection when manufacturing the semi-finished product. During the subsequent further processing of the semi-finished product, the contact projection or the latching collar is then also produced by forming or alternatively by machining, depending on which of the two elements is not yet present. This results in a multi-step production of the latching collar and the contact projection. Particularly preferably, the press sleeve is produced solely by forming; in this case, the press sleeve is present as a formed component. Preferably, the press sleeve is made of metal or at least partly of metal; the metal used is in particular steel, preferably stainless steel. The stop ring is made of plastic or at least partly of plastic, for example.

A further development of the invention provides for the latching collar and the contact projection to be arranged on a latching area of the press sleeve adjoining the pressing area and for a wall thickness of the press sleeve to change in the latching area starting from the pressing area. The latching area, in which the latching collar and the contact projection are present, borders directly on the pressing area, for example, and therefore extends directly away from it in the axial direction. In the pressing area, the press sleeve has a defined wall thickness. Preferably, the press sleeve is manufactured with a constant wall thickness throughout the entire pressing area. In the latching area, on the other hand, the wall thickness of the press sleeve changes, preferably continuously, in particular continuously from the pressing area to the end side. Preferably, starting from the pressing area, the wall thickness of the press sleeve initially decreases in the direction of the end side and then increases again. The wall thickness is preferably always understood to be the wall thickness in the radial direction, i.e. in a direction perpendicular to the longitudinal centre axis of the press sleeve. Such a design of the press sleeve again has the advantage that it is easy and inexpensive to manufacture.

A further development of the invention provides that the change in wall thickness is brought about by a bead produced on an outer circumference of the press sleeve. The bead is to be understood as a depression which completely and continuously surrounds the press sleeve in the circumferential direction and is formed in the press sleeve. The bead is produced on an outer circumference of the press sleeve so that the dimensions of the press sleeve in the radial direction in the area of the bead are reduced compared to the outer dimensions of the press sleeve in the pressing area. The latching collar and the contact projection are neighbouring this bead in the axial direction on the side facing away from the pressing area. The bead is also produced, for example, by forming, preferably by roll forming, and enables a particularly rigid configuration of the press sleeve at its second end, so that the press sleeve can be reliably fastened to the stop ring and/or the fitting body.

A further development of the invention provides that, viewed in longitudinal section, an inner circumference of the press sleeve expands from the direction of the pressing area in the direction of the end side and then reduces again to form the latching collar. The longitudinal section refers to a section through the press sleeve in which a sectional plane completely accommodates the longitudinal centre axis of the press sleeve. The widening of the inner circumference creates a recess in the press sleeve, which is bounded by the press sleeve on both sides in the axial direction and on the outside in the radial direction and is open on the inside in the radial direction.

The widening of the inner circumference of the press sleeve is achieved, for example, by forming the end of the press sleeve radially outwards. Once the inner circumference has been widened, it is reduced again to produce the latching collar. Preferably, the inner circumference of the press sleeve is reduced more than it was previously widened, so that the latching collar protrudes inwards beyond the pressing area when viewed in a radial direction. This design of the press sleeve in turn enables simple and cost-effective manufacture.

A further development of the invention provides for the outer circumference and the inner circumference of the press sleeve to run in the same direction after the pressing area to form the contact projection, in particular to be curved in the same direction, so that both the outer circumference and the inner circumference widen from the direction of the pressing area in the direction of the end side. Viewed in longitudinal section, the outer circumference and the inner circumference become larger together, at least in some areas, namely from the direction of the pressing area in the direction of the end side. Seen in longitudinal section, both the inner circumference and the outer circumference therefore extend radially outwards in this direction.

It may be provided that the outer circumference and the inner circumference are each curved at least in certain areas, namely curved in the same direction. This means that the curvatures of the outer circumference and inner circumference have the same sign when viewed in longitudinal section. However, it is also possible for the inner and outer circumferences to be straight, at least in certain areas. Such a design of the press sleeve creates both the aforementioned recess on the inner circumference of the press sleeve and the contact projection on the outer circumference. Once again, this enables particularly simple manufacture of the press sleeve.

A further development of the invention provides for the outer circumference of the press sleeve to have a greater pitch, at least in some areas, than the inner circumference. This means that the radial dimensions of the outer circumference increase more rapidly in the axial direction than the radial dimensions of the inner circumference. Accordingly, the wall thickness increases at least in some areas due to the greater pitch of the outer circumference compared to the pitch of the inner circumference. In this way, the contact projection is skilfully created without weakening the material of the press sleeve.

A further development of the invention provides for the end side to have a flat end face which merges radially outwards into the contact projection and radially inwards into the latching collar. The flat end face is in the form of a circular ring, for example. Particularly preferably, the end face is arranged completely in an imaginary plane that is perpendicular to the longitudinal centre axis of the press sleeve. However, an inclined arrangement of the end face can also be provided, in which the end face is in the form of a conical surface. Viewed in longitudinal section, the contact projection adjoins the end face in a radial outward direction and the latching collar in a radial inward direction. In this respect, both the contact projection and the latching collar are arranged directly adjacent to the end side. This achieves the advantages already mentioned.

The invention also relates to a method for producing a press sleeve for a press fitting of a pipe connection, in particular a press sleeve as described herein, wherein the press sleeve has a cylindrical pressing area, an end flange projecting outwards beyond the pressing area at a first end of the press sleeve in the radial direction with respect to a longitudinal centre axis of the press sleeve, and a latching collar projecting inwards in the radial direction at a second end of the press sleeve for latching with a fitting body and/or a stop ring of the press fitting. It is provided that at the second end of the press sleeve a contact projection projecting outwards in the radial direction and forming together with the latching collar an end side of the press sleeve is configured for contact with the stop ring.

The advantages of such a procedure or such a design of the press sleeve have already been pointed out. Both the press sleeve and the method for its manufacture can be further developed in accordance with the explanations in the context of this description, so that reference is made to them in this respect.

A further development of the invention provides for a workpiece to be formed into a semi-finished product by means of a first forming process in order to manufacture the compression sleeve and then for the latching collar and/or the contact projection to be formed on the semi-finished product by means of a second forming process and/or by machining. In this respect, the press sleeve is produced in several manufacturing steps. In a first of the manufacturing steps, the workpiece is formed to create the semi-finished product; in a second of the manufacturing steps, the latching collar and/or the contact projection are produced on the semi-finished product. Preferably, the forming is carried out by tensile pressure forming, particularly preferably by deep drawing.

In the course of the first manufacturing step, at least the pressing area of the press sleeve is produced. In addition, it may also be intended to form the end flange, namely also by means of the first forming process. In this respect, the semi-finished product has at least the pressing area and optionally the end flange. It may also be possible to produce the latching collar or the contact projection during the first step. Subsequent to the first manufacturing step, the semi-finished product produced by means of this step is subjected to the second forming process and/or machining in the course of the second manufacturing step. As part of the second manufacturing step, the latching collar, the contact projection or both are produced. If one of the elements has already been produced using the first forming process, only the other element is produced. The procedure described again enables particularly simple and cost-effective manufacture of the press sleeve.

Furthermore, the invention relates to a press fitting for a pipe connection, with a fitting body, with a press sleeve fixed to the fitting body, in particular a press sleeve according to the explanations in this description, and with a stop ring, wherein the press sleeve has a cylindrical pressing area, an end flange projecting outwards beyond the pressing area at a first end of the press sleeve in the radial direction with respect to a longitudinal centre axis of the press sleeve, and a latching collar projecting inwards in the radial direction at a second end of the press sleeve for latching with the fitting body and/or the stop ring of the press fitting. It is provided that at the second end of the press sleeve a contact projection projecting outwards in the radial direction and forming together with the latching collar an end side of the press sleeve is configured for contact with the stop ring.

With regard to the advantages and possible advantageous further developments, reference is again made to the explanations in this description.

A further development of the invention provides that the stop ring has an outer ring and an inner ring connected to the outer ring via a connecting web arrangement, wherein the outer ring and the inner ring are arranged on opposite sides of the contact projection and the latching collar when viewed in the axial direction, so that the stop ring is held positively on the press sleeve in the axial direction. The stop ring is multi-part and has at least the outer ring and the inner ring. Both rings are preferably continuous and uninterrupted in the circumferential direction. They are arranged offset to each other in the axial direction in relation to the longitudinal centre axis of the fitting body, which coincides, for example, with the longitudinal centre axis of the press sleeve. This means that they are preferably arranged to overlap each other in the axial direction, but the outer ring projects beyond the inner ring in a first direction and the inner ring projects beyond the outer ring in a second direction opposite to the first direction.

The outer ring and the inner ring are attached to each other via the connecting web arrangement. This has one or more connecting webs, which connect the outer ring and the inner ring to each other. For example, the connecting web arrangement is rigid so that the outer ring and the inner ring are fixed relative to each other. However, the connecting web arrangement can also be flexible, in particular elastic. In this case, it is easier to insert the press sleeve between the outer ring and the inner ring and the press sleeve is also held reliably between the outer ring and the inner ring. Preferably, the inner ring and the outer ring as well as the connecting web arrangement are configured in one piece and/or in the same material. For example, the stop ring is manufactured by injection moulding, i.e. it is available as an injection moulded part.

The inner ring engages in the outer ring and has outer dimensions that are smaller than the inner dimensions of the outer ring, at least in some areas. Seen in the axial direction, the outer ring and the inner ring are arranged on opposite sides of the contact projection and the latching collar. This means that at least the outer ring rests against the contact projection on a first side and the inner ring rests against the stop collar on a second side opposite the first side, so that the press sleeve is held positively against the stop ring in the axial direction. It may also be provided that the press sleeve engages between the outer ring and the inner ring so that it rests against the outer ring in a radial outward direction and against the inner ring in a radial inward direction. However, it is also possible for the press sleeve to bear against the outer ring in the radial outward direction, but only against the inner ring in the axial direction, with the inner ring thus being adjacent to the press sleeve when viewed in longitudinal section. In any case, the advantages already mentioned are achieved.

A further development of the invention provides that the outer ring has a retaining jaw arrangement with several retaining jaws projecting inwards in the radial direction, and/or that the inner ring has a latching jaw arrangement with several latching jaws projecting outwards in the radial direction and/or in the axial direction in the direction of the outer ring. The retaining jaw arrangement therefore has several retaining jaws, whereby the retaining jaws are to be understood as projections projecting radially inwards beyond a base body of the outer ring. The retaining jaws are arranged at a distance from each other in the circumferential direction. Similarly, the latching jaw arrangement has a plurality of latching jaws, which are in the form of projections projecting radially outwards and/or axially beyond a base body of the inner ring. The latching jaws are also spaced apart from each other in the circumferential direction. The retaining jaws are provided and configured for contact with the contact projection of the press sleeve. The latching jaw arrangement co-operates with the latching collar in order to fix the press sleeve relative to the stop ring.

A further development of the invention provides for the latching jaws to form a latching recess in which the latching collar positively engages. The latching recess is, for example, a recess produced in the latching jaws. This is limited in the axial direction by the latching jaws, so that when the latching collar is arranged in the latching recess, the press sleeve is held positively, i. e. in a form-fitting manner, relative to the stop ring. With such a design of the press fitting, reliable retention of the press sleeve on the stop ring and vice versa is ensured.

The invention also relates to a method for manufacturing a press fitting for a pipe connection, in particular a press fitting according to the explanations in this description, wherein the press fitting has a fitting body, a press sleeve fixed to the fitting body and a stop ring, wherein the press sleeve has a cylindrical pressing area, an end flange projecting outwards beyond the pressing area at a first end of the press sleeve in the radial direction with respect to a longitudinal centre axis of the press sleeve, and a latching collar projecting inwards in the radial direction at a second end of the press sleeve for latching with the fitting body and/or the stop ring of the press fitting. It is provided that at the second end of the press sleeve a contact projection projecting outwards in the radial direction and forming together with the latching collar an end side of the press sleeve is configured for contact with the stop ring, wherein the latching collar and the contact projection are arranged to interact with the stop ring in order to hold the press sleeve and the stop ring against one another.

With regard to the advantages and possible advantageous further developments of the press fitting and the method for manufacturing it, reference is again made to the explanations in this description. The manufacturing process includes, for example, assembling the press fitting, which includes arranging the press sleeve and the stop ring on the fitting body. During assembly, the press sleeve is arranged together with the stop ring on the fitting body and fastened to it. Additionally or alternatively, the manufacturing of the press fitting includes the production of the stop ring, in particular by means of injection molding.

A further development of the invention provides for the latching collar to be positively arranged in a latching recess of the stop ring and the stop ring to be positively arranged with a latching projection in a latching recess of the fitting body, or for the latching collar and the stop ring to be positively arranged in the latching recess of the fitting body. In a first variant, the latching collar is only indirectly connected to the fitting body. For this purpose, the latching collar is attached to the stop ring by engaging in the latching recess of the stop ring. For its part, the stop ring has the latching projection with which it engages positively in the latching recess of the fitting body. For example, the press fitting is configured in such a way that the latching collar is completely outside the latching recess of the fitting body, i.e. does not engage in it.

In a second variant, the latching collar engages directly in the latching recess of the fitting body. Preferably, the stop ring, in particular its inner ring, is arranged next to the latching collar in the latching recess. As a result, the latching collar is fixed in the latching recess in the axial direction or at least its play in the axial direction is reduced. Due to the engagement of the stop ring in the latching recess, the stop ring itself is also reliably held on the fitting body so that, for example, slipping in the axial direction or tilting relative to the longitudinal centre axis is prevented. Accordingly, a positionally stable arrangement of the stop ring is realised.

Both in the first variant and in the second variant, the stop ring, in particular its outer ring, surrounds the press sleeve, namely at its second end. For example, the stop ring is supported on the pressing area and extends in the axial direction from the pressing area over the press sleeve. The stop ring thus engages over the press sleeve and protrudes beyond it in the axial direction. This reliably holds the press sleeve on the fitting body and, in particular, reliably prevents unintentional loosening of the positive connection between the latching collar on the one hand and the stop ring or the fitting body on the other.

A further development of the invention provides for the stop ring to be produced by injection molding. In particular in the case of the first variant explained above, in which the latching collar is arranged in the latching recess of the stop ring and the latching projection is arranged in the latching recess of the fitting body or engages therein, an undercut is present on the stop ring due to its latching recess. A split core is preferably used to form this during injection molding. The core therefore consists of several partial cores, which are extended from the mold in an offset manner during injection molding, in particular during the opening of the mold used for injection molding.

The latching recess of the stop ring is defined by a latching jaw, which is present at least in some areas between the two partial cores. The partial cores are designed in such a way that the latching jaw rests against both a first of the partial cores and a second of the partial cores. The first partial core is designed in such a way that it can be displaced out of the mold without deforming and/or displacing the latching jaw, in particular in the direction of the second sub-core. However, the second partial core engages behind the latching jaw to produce the latching recess. When the second partial core is displaced out of the casting mold, the latching jaw is deformed and/or displaced or deflected accordingly. As long as the first partial core is still completely in the casting mold, it prevents such deformation or displacement. Accordingly, the second partial core can only be displaced out of the mold after the first partial core has been displaced out of the mold.

For example, it is envisaged that the casting mold has two cores that are arranged on opposite sides of the stop ring, namely in the axial direction with respect to a longitudinal central axis of the stop ring. A first of the cores is, for example, an undivided core, whereas a second of the cores is present as the split core and correspondingly preferably has the two partial cores. With the help of the cores described, the stop ring can be produced particularly easily despite its complex shape. Preferably, the stop ring is made of polyoxymethylene (POM), polyethylene (PE) or polypropylene (PP) or at least comprises one or more of these materials.

A further development of the invention provides that the press sleeve and the stop ring are pre-assembled to form an assembly. Here, the press sleeve is fastened to the stop ring, in particular with a positive fit, preferably by engaging the latching collar of the press sleeve in the latching recess of the stop ring. The pre-assembled assembly is then pushed onto the fitting body until the latching projection of the stop ring engages in the latching recess of the fitting body. It is also possible to arrange the press sleeve on the stop ring so that it rests against it, but the latching collar of the press sleeve is located away from or outside of the latching recess of the stop ring. The assembly produced in this way is then pushed onto the fitting body, with the stop ring being displaced relative to the fitting body and/or the press sleeve being displaced relative to the stop ring until the latching collar of the press sleeve engages in the latching recess of the stop ring and the latching projection of the stop ring engages in the latching recess of the fitting body. Such a procedure enables a force-free assembly of the stop ring, during which deformation of its latching projection and/or material removal from its latching projection is avoided.

Alternatively, it is also possible to first push the stop ring onto the fitting body, whereby the latching projection of the stop ring is arranged away from the latching recess of the fitting body. The press sleeve is then mounted on the stop ring to form the assembly so that its latching collar engages in the latching recess of the stop ring. The press sleeve and stop ring are then moved together to form the assembly until the stop ring's latching protrusion engages in the latching recess of the fitting body. This also achieves the previously explained force-free assembly and the associated advantages.

The features and combinations of features described in the description, in particular the features and combinations of features described in the following description of the figures and/or shown in the figures, can be used not only in the combination indicated in each case, but also in other combinations or in the sole position, without departing from the scope of the invention, in particular the scope of the claims. Thus, embodiments which are not explicitly shown or explained in the description and/or the figures, but which emerge from the explained embodiments or can be derived from them, in particular within the scope of the claims, are also to be regarded as being covered by the invention.

The invention is explained in more detail below with reference to the embodiments shown in the drawing, without limiting the invention. It shows:
- Figure 1: a schematic side view of a press sleeve for a press fitting of a pipe connection,
- Figure 2: a schematic longitudinal sectional view of a wall of the press sleeve at one of its ends,
- Figure 3: a press fitting for a pipe connection, with a fitting body, a press sleeve and a stop ring, according to a first embodiment,
- Figure 4: a schematic representation of the press fitting for the pipe connection, according to a second embodiment,
- Figure 5: a schematic partial sectional view of the stop ring in a first view, and
- Figure 6: a schematic partial sectional view of the stop ring in a second view.

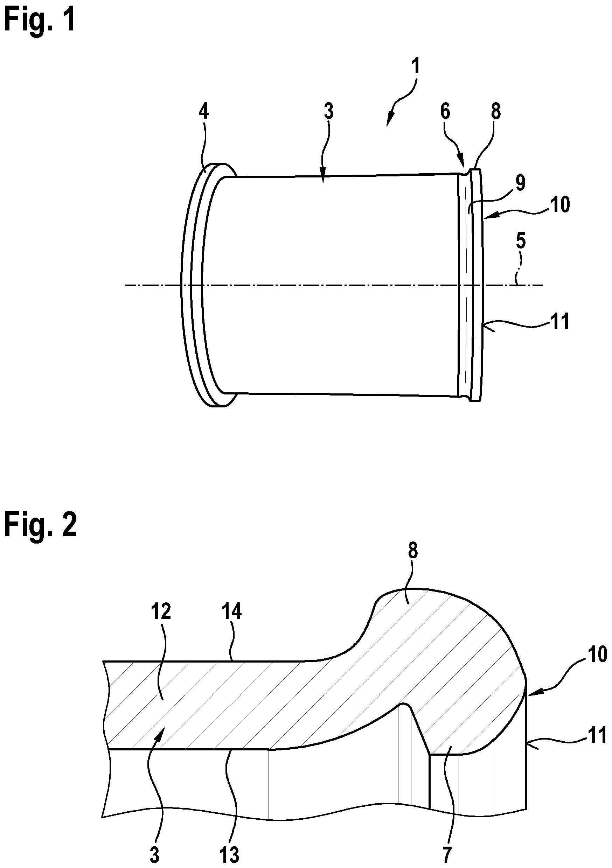

Figure 1 shows a schematic side view of a press sleeve 1, as it is used as a component of a press fitting 2 not shown in detail here. The press fitting 2, in turn, is used to manufacture a pipe connection or as a component of such a pipe connection. The press sleeve 1 has a cylindrical pressing area 3. An end flange 4 adjoins the pressing area 3 at a first end of the press sleeve 1. The end flange 4 is essentially a circumferential and continuous radial web with respect to a longitudinal centre axis 5 of the press sleeve 1. For example, the end flange 4 is produced together with the pressing area 3 in the course of a forming process.

At a second end opposite the first end of the press sleeve 1, the press sleeve 1 has a latching area 6. In the latching area 6, the press sleeve 1 has a latching collar 7, which is not recognisable here and projects inwards in a radial direction, and a contact projection 8, which projects outwards in a radial direction. In addition, a bead 9, for example, is produced in the latching area 6, which reduces the wall thickness of the press sleeve 1 in the latching area 6 compared to a wall thickness present in the pressing area 3. Both the latching collar 7 and the contact projection 8 are directly adjacent to an end side 10 of the press sleeve 1, whereby the end side 10 limits the press sleeve 1 on its side opposite the end flange 4 in the axial direction with respect to the longitudinal centre axis 5. There is a flat end face 11 on the end side 10, which preferably lies completely in an imaginary plane that is perpendicular to the longitudinal centre line 5.

Figure 2 shows a schematic longitudinal sectional view of a wall 12 of the press sleeve 1. Part of the pressing area 3, the latching collar 7 and the contact projection 8 can be seen. In particular, an inner circumference 13 and an outer circumference 14 of the wall 12 or the press sleeve 1 are recognisable. The wall 12 of the press sleeve 1 is bounded inwards in a radial direction by the inner circumference 13 and outwards in a radial direction by the outer circumference 14. The inner circumference 13 and the outer circumference 14 converge on the end side 10, in particular in the end face 11, or are at least connected to each other via the end side 10 or the end face 11.

It can be seen that a wall thickness of the wall 12 in the pressing area 3 is constant. Starting from the pressing area 3 in the direction of the end side 10, however, the wall thickness changes, in particular continuously. In the illustrated embodiment example, the wall thickness first decreases and then increases again in order to form the latching collar 7. The wall thickness is preferably understood to be a thickness of the wall 12 in a direction perpendicular to the longitudinal centre line 5. The reduction of the wall thickness is achieved by a corresponding course of the inner circumference 13 and the outer circumference 14.

For example, the inner circumference 13 and the outer circumference 14 run in the same direction, i.e. extend in the same direction, either inwards in a radial direction or outwards in a radial direction. For example, they are curved in the same direction, whereby the inner circumference 13 is already curved where the outer circumference 14 is still straight in order to reduce the wall thickness. In some areas, however, the curvature of the outer circumference 14 is more pronounced than that of the inner circumference 13, thereby creating the contact projection 8.

The end face 10 of the press sleeve 1 is preferably inclined with respect to an imaginary plane perpendicular to the longitudinal central axis 5 or it is rounded at least in some areas when viewed in longitudinal-section. As a result, the press sleeve 1 has an inclined and/or crowned area on the end face 10. For example, the end face 10 is composed of two surfaces, one of the surfaces being on the outside in the radial direction and another of the surfaces being on the inside in the radial direction. Both surfaces are angled with respect to the imaginary plane, in particular due to their inclined arrangement and/or crowned configuration, and form an angle with it that is greater than 0° and less than 180°, in particular at least 15° and at most 40°, at least 20° and at most 35° or at least 25° and at most 30°. Preferably, the surfaces are angled in the opposite direction to the plane; both surfaces are each inclined in the direction of the pressing area 3. As a result, they form insertion slopes that make it easier to fit the press sleeve 1.

On its side facing away from the end face 10, the latching collar 7 forms a latching surface and the contact projection 8 forms a contact surface. The latching surface and the contact surface extend in opposite directions, at least when viewed in longitudinal-section, namely the latching surface inwards in a radial direction and the contact surface outwards in a radial direction. The latching surface is, for example, flat throughout, if seen in longitudinal section. In particular, it lies completely in an imaginary plane perpendicular to the longitudinal central axis 5. Alternatively, it is angled with respect to an imaginary plane that completely accommodates the longitudinal central axis 5 or runs parallel to it, i.e. forms an angle with it that is greater than 0° and less than 180°. Preferably, the angle is at least 70° and at most 90°, at least 80° and at most 90° or at least 85° and at most 90°. This creates a rear grip. The same as to the latching surface applies to the contact surface.

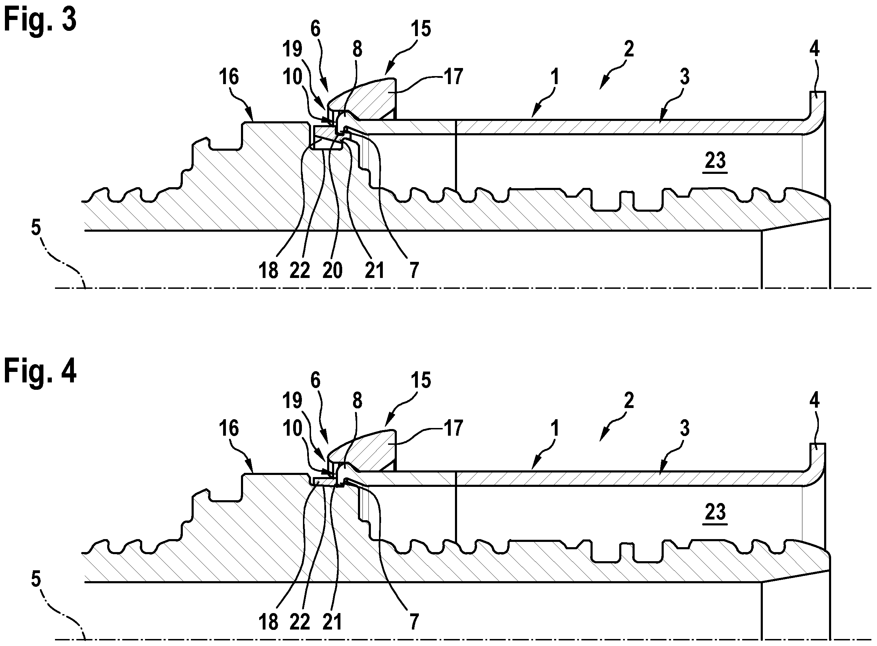

Figure 3 shows the press fitting 2 in a first embodiment. In particular, the press sleeve 1, a stop ring 15 and a fitting body 16 are shown. The stop ring 15 consists of an outer ring 17 and an inner ring 18 as well as a connecting web arrangement 19 connecting the outer ring 17 and the inner ring 18 to each other. It can be seen that the latching collar 7 extends inwards in a radial direction into a latching recess 20 of the inner ring 18, so that the press sleeve 1 is positively connected to the inner ring 18. Here, the latching surface lies against a latching counter surface of the inner ring 18. The inner ring 18 in turn has a latching projection 21, with which it engages in a latching recess 22 of the fitting body 16.

At the same time, the outer ring 17 engages over the second end of the press sleeve 1 and lies radially inwards against the contact projection 8. Accordingly, the latching collar 7 is reliably held in the latching recess 20 in the radial direction. The contact surface of the contact projection 8 is also in contact with a contact counter surface of the outer ring 17. In the radial direction between the fitting body 16 and the press sleeve 1, a pipe receptacle 23 is created, which is bounded radially outwards by the press sleeve 1 and radially inwards by the press fitting 2. The pipe holder 23 is used to hold a pipe, which is then fixed to the press fitting 2 or its fitting body 16 using the press sleeve 1, namely by forming the press sleeve 1 in its pressing area 3.

Figure 4 shows a schematic representation of the press fitting 2 in a second embodiment. This is fundamentally similar to the first embodiment, so that reference is made to the corresponding explanations and only the differences are discussed below. These lie in the fact that the latching collar 7 engages directly in the latching recess 22 of the fitting body 16, i.e. not merely indirectly, as is the case for the first embodiment. Accordingly, the latching recess 20 of the inner ring 18 is omitted, but the inner ring 18 still engages in the latching recess 22 of the fitting body 16. For example, it is completely present in the latching recess 22 or it engages in it with its latching projection 21. In this case, the inner ring 18 or the latching projection 21 is arranged next to the press sleeve 1 in the latching recess 22 when viewed in the axial direction with respect to the longitudinal centre axis 5, in particular next to the latching area 6 and in particular next to the end side 10. Preferably, the inner ring 18 is in axial contact with the end side 10 in order to limit or completely prevent displacement of the press sleeve 1 in the axial direction relative to the fitting body 16.

For example, the latching recess 22 of the fitting body 16 is limited in the axial direction by two spaced-apart walls. The press sleeve 1 lies with the latching collar 7 in the axial direction against a first of the walls and is spaced apart from a second of the walls. Seen in the axial direction, the inner ring 18 is located between the latching collar 7 and the second wall, but is itself spaced apart from the first wall due to the latching collar 7. For example, the latching collar 7 is positively engaged between the first wall and the inner ring 18.

Preferably, the inner ring 18 is held on the end side 10 of the press sleeve 1 by the connecting web arrangement 19, namely by the outer ring 17 bearing against the contact projection 8 on a first side in the axial direction and the inner ring 18 bearing against the end side 10 or the latching collar 7 on a second side opposite the first side in the axial direction, so that the latching collar 7 and the contact projection 8 are held in a form-fitting manner in the axial direction between the outer ring 17 and the inner ring 18. As a result, the press sleeve 1 is fixed in the axial direction relative to the stop ring 15.

Both for the first embodiment and for the first embodiment, the stop ring 15 co-operates positively, i.e. in a form-fitting manner, with the press sleeve 1 both on its side located on the outside in the radial direction and on its side located on the inside in the radial direction in order to fix the press sleeve 1 and the stop ring 15 in the axial direction relative to one another. On its inner side in the radial direction, the press sleeve 1 has the latching collar 7 and on its outer side in the radial direction it has the contact projection 8. In both embodiments, the latching collar 7 interacts positively in a form-fitting manner with the inner ring 18 and the contact projection 8 with the outer ring 17.

In the first embodiment, the latching collar 7 is fixed on two sides in the axial direction with respect to the inner ring 18 and therefore the stop ring 15 by the positive engagement in the latching recess 20 of the inner ring 18. In the second embodiment, the latching collar 7 is only in contact with the inner ring 18 on one side, so that only a displacement of the press sleeve 1 towards the inner ring 18 is limited, but a displacement of the press sleeve 1 away from the inner ring 18 is not prevented. In both embodiments, however, the contact projection 8 only interacts with the outer ring 17 on one side in the axial direction. It therefore only prevents displacement of the press sleeve 1 in a first direction, but not in an opposite second direction. For both embodiments, the latching of the press sleeve 1 in the axial direction relative to the stop ring 15 is achieved by the co-operation of both the latching collar 7 with the inner ring 18 and the contact projection 8 with the outer ring 17.

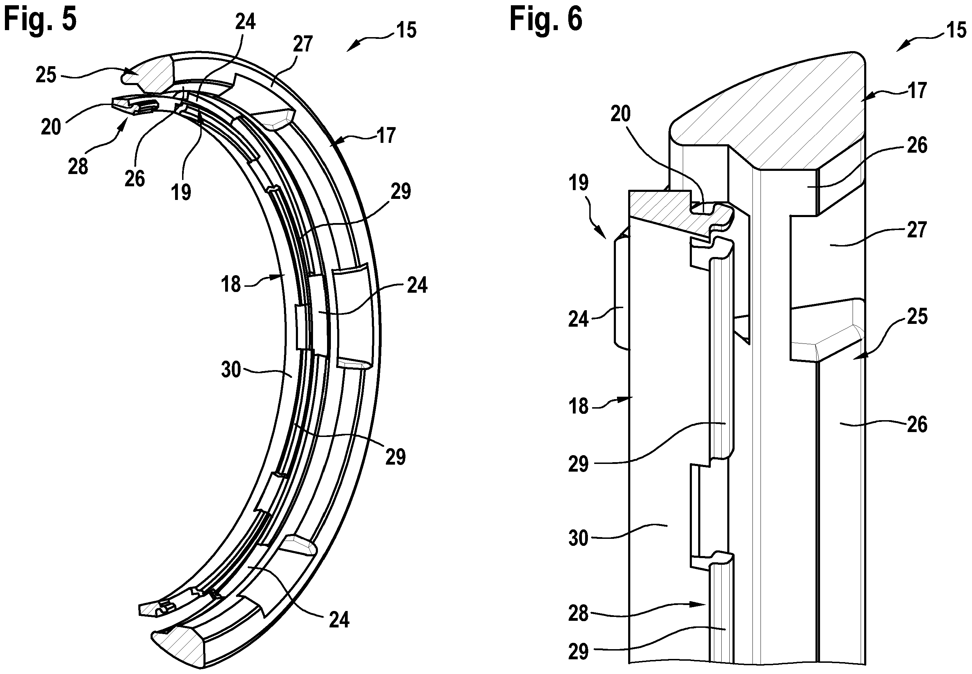

Figure 5 shows a schematic partial sectional view of the stop ring 15 in a first view. The outer ring 17 and the inner ring 18, which are connected to each other via the connecting web arrangement 19, can be seen. The connecting web arrangement 19 has several connecting webs 24, which are only labelled here by way of example. The outer ring 17 has a retaining jaw arrangement 25, which has several retaining jaws 26 that project inwards in a radial direction over a base body 27 of the outer ring 17. The inner ring 18, on the other hand, has a latching jaw arrangement 28 with several latching jaws 29, which extend from a base body 30 of the inner ring 18.

In the illustrated embodiment example, the latching jaws 29 extend in an axial direction away from the base body 30. The retaining jaws 26 and the latching jaws 29 are each arranged at a distance from one another in the circumferential direction. For example, the retaining jaws 26 and the latching jaws 29 each have identical dimensions in the circumferential direction and/or are each evenly distributed in the circumferential direction, respectively. Preferably, the retaining jaws 26 and the latching jaws 29 are arranged offset from one another in the circumferential direction. It can be seen that the latching jaws 29 delimit the latching recess 20. The stop ring 15 shown here is therefore preferably intended for use in the first embodiment of the press fitting 2.

Figure 6 shows a schematic partial sectional view of the stop ring 15 in a second view. It is clear that the outer ring 17 engages over the latching recess 20 in the axial direction in order to reliably hold the latching collar 7 of the press sleeve 1 in the latching recess 20. The described geometry of the press fitting 2 in general and the press sleeve 1 and/or the stop ring 15 in particular enable both simple and cost-effective manufacture of the press fitting 2 and simple and reliable assembly of the press sleeve 1 together with the stop ring 15 on the fitting body 16. With the aid of the described design, both the press sleeve 1 and the stop ring 15 are held reliably and permanently on the fitting body 16. This prevents the press sleeve 1 and/or the stop ring 15 from becoming detached from the fitting body 16 during transport, for example, and having to be reattached to the fitting body 16 prior to assembly. This significantly simplifies the creation of the pipe connection using the press fitting 2.

### LIST OF REFERENCE SIGNS

- 1: press sleeve
- 2: press fitting
- 3: pressing area
- 4: end flange
- 5: longitudinal centre axis
- 6: latching area
- 7: latching collar
- 8: contact projection
- 9: bead
- 10: end side
- 11: end face
- 12: wall
- 13: inner circumference
- 14: outer circumference
- 15: stop ring
- 16: fitting body
- 17: outer ring
- 18: inner ring
- 19: connecting web arrangement
- 20: latching recess
- 21: latching projection
- 22: latching recess
- 23: pipe receptacle
- 24: connecting web
- 25: retaining jaw arrangement
- 26: retaining jaw
- 27: base body
- 28: latching jaw arrangement
- 29: latching jaw
- 30: base body

## Claims

1. Press sleeve (1) for a press fitting (2) of a pipe connection, with a cylindrical pressing area (3), an end flange (4) projecting outwards beyond the pressing area (3) at a first end of the press sleeve (1) in the radial direction with respect to a longitudinal centre axis (5) of the press sleeve (1), and a latching collar (7) projecting inwards in the radial direction at a second end of the press sleeve (1) for latching with a fitting body (16) and/or a stop ring (15) of the press fitting (2), **characterised in that** at the second end of the press sleeve (1) a contact projection (8) projecting outwards in the radial direction and forming together with the latching collar (7) an end side (10) of the press sleeve (1) is configured for contact with the stop ring (15).

2. Press sleeve according to claim 1, **characterised in that** the latching collar (7) and the contact projection (8) are arranged on a latching area (6) of the press sleeve (1) adjoining the pressing area (3) and a wall thickness of the press sleeve (1) changes in the latching area (6) starting from the pressing area (3).

3. Press sleeve according to one of the preceding claims, **characterised in that** the change in wall thickness is brought about by a bead (9) produced on an outer circumference (14) of the press sleeve (1).

4. Press sleeve according to one of the preceding claims, **characterised in that,** viewed in longitudinal section, an inner circumference (13) of the press sleeve (1) expands from the direction of the pressing area (3) in the direction of the end side (10) and then reduces again to form the latching collar (7).

5. Press sleeve according to one of the preceding claims, **characterised in that** the outer circumference (14) of the press sleeve (1) has a greater pitch, at least in some areas, than the inner circumference (13).

6. Press sleeve according to one of the preceding claims, **characterised in that** the outer circumference (14) and the inner circumference (13) of the press sleeve (1) run in the same direction adjacent to the pressing area (3) to form the contact projection (8), so that both the outer circumference (14) and the inner circumference (13) widen from the direction of the pressing area (3) in the direction of the end side (10).

7. Press sleeve according to one of the preceding claims, **characterised in that** the end side (10) has a flat end face (11) which merges outwards in the radial direction into the contact projection (8) and inwards in the radial direction into the latching collar (7).

8. Method for producing a press sleeve (1) for a press fitting (2) of a pipe connection, in particular a press sleeve (1) according to one or more of the preceding claims, wherein the press sleeve (1) has a cylindrical pressing area (3), an end flange (4) projecting outwards beyond the pressing area (3) at a first end of the press sleeve (1) in the radial direction with respect to a longitudinal centre axis (5) of the press sleeve (1) and a latching collar (7) projecting inwards in the radial direction at a second end of the press sleeve (1) for latching with a fitting body (16) and/or a stop ring (15) of the press fitting (2), **characterised in that** at the second end of the press sleeve (1) a contact projection (8) projecting outwards in the radial direction and forming together with the latching collar (7) an end side (10) of the press sleeve (1) is configured for contact with the stop ring (15).

9. Method according to claim 8, **characterised in that,** in order to produce the press sleeve (1), a workpiece is formed into a semi-finished product by means of a first forming process and then the latching collar (7) and/or the contact projection (8) are formed on the semi-finished product by means of a second forming process and/or by machining.

10. Press fitting (2) for a pipe connection, with a fitting body (16), with a press sleeve (1) fixed to the fitting body (16), in particular a press sleeve (1) according to one or more of claims 1 to 7, and with a stop ring (15), wherein the press sleeve (1) has a cylindrical pressing area (3), an end flange (4) projecting outwards beyond the pressing area (3) at a first end of the press sleeve (1) in the radial direction with respect to a longitudinal centre axis (5) of the press sleeve (1) and a latching collar (7) projecting inwards in the radial direction at a second end of the press sleeve (1) for latching with the fitting body (16) and/or the stop ring (15) of the press fitting (2), **characterised in that** at the second end of the press sleeve (1) a contact projection (8) projecting outwards in the radial direction and forming together with the latching collar (7) an end side (10) of the press sleeve (1) is configured for contact with the stop ring (15).

11. Press fitting according to claim 10, **characterised in that** the stop ring (15) has an outer ring (17) and an inner ring (18) connected to the outer ring (17) via a connecting web arrangement (19), the outer ring (17) and the inner ring (18) being arranged on opposite sides of the contact projection (8) and the latching collar (7) when viewed in the axial direction, so that the stop ring (15) is held positively on the press sleeve (1) in the axial direction.

12. Press fitting according to one of the preceding claims, **characterised in that** the outer ring (17) has a retaining jaw arrangement (25) with a plurality of retaining jaws (26) projecting inwards in the radial direction, and/or **in that** the inner ring (18) has a latching jaw arrangement (28) with a plurality of latching jaws (29) projecting outwards in the radial direction and/or in the axial direction in the direction of the outer ring (17).

13. Press fitting according to one of the preceding claims, **characterised in that** the latching jaws (29) form a latching recess (20) in which the latching collar (7) engages in a form-fitting manner.

14. Method for manufacturing a press fitting (2) for a pipe connection, in particular a press fitting (2) according to one or more of claims 10 to 13, wherein the press fitting (2) has a fitting body (16), a press sleeve (1) fixed to the fitting body (16) and a stop ring (15), wherein the press sleeve (1) has a cylindrical pressing area (3), an end flange (4) projecting outwards beyond the pressing area (3) at a first end of the press sleeve (1) in the radial direction with respect to a longitudinal centre axis (5) of the press sleeve (1), and a latching collar (7) projecting inwards in the radial direction at a second end of the press sleeve (1) for latching with the fitting body (16) and/or the stop ring (15) of the press fitting (2), **characterised in that** at the second end of the press sleeve (1) a contact projection (8) projecting outwards in the radial direction and forming together with the latching collar (7) an end side (10) of the press sleeve (1) is configured to bear against the stop ring (15), wherein the latching collar (7) and the contact projection (8) are arranged to interact with the stop ring (15) in order to hold the press sleeve (1) and the stop ring (15) against one another.

15. Method according to claim 14, **characterised in that** the latching collar (7) is positively arranged in a latching recess (20) of the stop ring and the stop ring (15) is positively arranged with a latching projection (21) in a latching recess (92) of the fitting body (16), or **in that** the latching collar (7) and the stop ring (15) are positively arranged in the latching recess (22) of the fitting body (16).
